Europäisches Patentamt

European Patent Office

Office européen des brevets

(19)

(11) Veröffentlichungsnummer: **0 428 858 A1**

## (12) EUROPÄISCHE PATENTANMELDUNG

(21) Anmeldenummer: **90119426.6**

(22) Anmeldetag: **10.10.90**

(51) Int. Cl.5: **A47C 7/18**, B29C 67/22

(30) Priorität: **17.10.89 DE 3934652**

(43) Veröffentlichungstag der Anmeldung:
**29.05.91 Patentblatt 91/22**

(84) Benannte Vertragsstaaten:
**AT BE DE ES FR GB IT NL**

(71) Anmelder: **Dunlop GmbH**
**Birkenhainer Strasse 77**
**W-6450 Hanau(DE)**

(72) Erfinder: **Sigmund, Dieter**
**Friedrichstr. 38**
**W-6450 Hanau(DE)**

(74) Vertreter: **Dipl.-Phys.Dr. Manitz**
**Dipl.-Ing.Dipl.-Wirtsch.-Ing. Finsterwald**
**Dipl.-Phys. Rotermund Dipl.-Chem.Dr. Heyn**
**B.Sc.(Phys.) Morgan**
**Robert-Koch-Strasse 1**
**W-8000 München 22(DE)**

(54) **Elastisches Formteil.**

(57) Es wird ein mit einem Bezugmaterial versehenes, elastisches Formteil beschrieben, das aus einem Schaumstoffkörper (1) aus einem offenporigen, sich mit einer Bezugmaterialkaschierung (2, 3) vollflächig verbindenden Polyurethan-Schaumstoff besteht, der nach dem sogenannten Heißschaumverfahren hergestellt wird. Die Herstellung des Formteils erfolgt durch Hinterschäumen des vorgenähten Bezugmaterials.

## ELASTISCHES FORMTEIL

Die Erfindung betrifft ein elastisches Formteil, bestehend aus einem zumindest sichtseitig vorgesehenen, innenseitig wenigstens mit einer Schaumkaschierung ausgestatteten und entsprechend der Endform vorgenähten Bezugmaterial und einem durch einen Ausschäumvorgang in den Bezug eingebrachten und diesen in der vorgegebenen Endform hinterfüllenden und spannenden Schaumstoffkörper.

Es ist bekannt, Formteile, z. B. für Polstermöbel, Fahrzeugsitze und dergleichen, zu schäumen und anschließend mit einem Bezugmaterial, insbesondere Stoff, zu überziehen. Dabei wird das Bezugmaterial vorgenaht und im Regelfall in den Randbereichen mit einem Keder versehen, so daß beim Verklammern ein Ausreißen des Bezugmaterials bzw. des Stoffes möglichst verhindert wird. Vor allem der erforderliche Arbeitsaufwand beim Beziehen der Formteile, aber auch der durch die Notwendigkeit der Verwendung von Kedern und/oder Polsterdrähten bedingte Zusatzaufwand bei der Vorbereitung der zu verarbeitenden Materialien führt zu einer unerwünschten Erhöhung der Fertigungskosten. Außerdem besteht stets die Gefahr, daß bei nicht ausreichend sorgfältiger Arbeitsweise unsaubere Polsterkanten entstehen, und es läßt sich nicht verhindern, daß bei Formteilen mit komplizierterer Kontur nicht in allen Bereichen des Formteils ein einwandfreies Anliegen des Bezugs am Schaumstoffkörper erreicht wird.

Bekannt ist es auch bereits, vorgenähte Bezugmaterialien unmittelbar mit sogenanntem Kaltschaum auszuschäumen, um auf diese Weise die aufwendigen Bezugsarbeiten zu vermeiden. Nachteilig ist dabei vor allem, daß aufgrund der bei den Schäumvorgängen auftretenden hohen Drücke nicht nur ein erheblicher Aufwand im Hinblick auf die erforderliche Abdichtung der Form getroffen werden muß, sondern daß bei Kaltschaum die bei der Herstellung entstehenden geschlossenen Zellen durch ein Aufbrechen geöffnet werden müssen. Dieses Aufbrechen des Kaltschaums kann entweder durch Einbringen des Formkörpers in eine Unterdruckkammer oder durch mechanische Knetung des fertig bezogenen Formkörpers erfolgen. Dies führt nicht nur zu einem unerwünschten zusätzlichen Arbeitsschritt, sondern auch dazu, daß durch diese mechanische Belastungen die Verbindung zwischen Bezugmaterial und Schaumkörper zumindest bereichsweise beeinträchtigt oder sogar gelöst wird, was zu Qualitätseinbußen führt, die ggf. erst im Laufe der längeren Benutzung in Erscheinung treten und deshalb besonders unerwünscht sind.

Aufgabe der Erfindung ist es, ein elastisches Formteil der eingangs angegebenen Art zu schaffen, das die vorstehend geschilderten Nachteile nicht aufweist und sich vor allem durch eine einwandfreie, vollflächige Verbindung zwischen Schaumstoffkörper und Bezugmaterial auszeichnet sowie den Vorteil besitzt, daß es zeit- und kostengünstig gefertigt werden kann.

Gelöst wird diese Aufgabe im wesentlichen dadurch, daß der Schaumstoffkörper aus einem offenporigen, sich mit der Bezugmaterialkaschierung vollflächig verbindenden PUR-Schaumstoff besteht, der nach dem sogenannten Heißschaumverfahren eingebracht ist.

Durch diese Maßnahmen wird es in überraschender Weise möglich, eine außerordentlich stabile Verbindung zwischen Schaumstoffkörper und Bezugmaterial zu schaffen, und zwar auch bei komplizierten, sowohl konvexe als auch konkave Bereiche aufweisenden Formteilen, wobei von besonderer Bedeutung ist, daß diese vollflächige Verbindung keinerlei störenden mechanischen Belastungen während des Fertigungsvorgangs oder im Anschluß an den Fertigungsvorgang ausgesetzt werden muß, da der Heißschaum bedingt durch das Verfahren bereits offenzellig hergestellt wird und somit auch nicht die Gefahr besteht, daß sich im späteren Gebrauch des Formteils Löseerscheinungen zeigen, die durch zunächst versteckte Beeinträchtigungen der Verbindung zwischen Schaumkörper und Bezugmaterial bedingt sind.

Von wesentlichem Vorteil ist ferner, daß bei Einsatz von Heißschaum bei gleicher Härte des jeweiligen Formkörpers Gewichtseinsparungen möglich sind und auch auf zusätzliche Nahtabdichtungen verzichtet werden kann, da der Schäumvorgang praktisch drucklos vor sich geht.

Eine besonders vorteilhafte Verwendung von erfindungsgemäßen Formteilen besteht in ihrer Ausbildung als hinterschäumte Füllstücke für Kraftfahrzeugsitzbereiche, insbesondere in Form der Seitenteile von Hintersitzbänken. Dabei wirkt sich auch günstig aus, daß die erfindungsgemäßen Formteile mit hoher und gleichbleibenden Dimensionsgenauigkeit gefertigt werden können.

In die erfindungsgemäßen Formteile können insbesondere auch metallische Verstärkungs- und/oder Rahmenelemente integriert werden, die sich zumindest zum Teil zu Befestigungszwecken nach außen erstrecken.

Dabei wird wiederum der Vorteil erzielt, daß aufgrund der exakten und vollflächigen sowie dauerhaften Verbindung zwischen Bezugmaterial und Schaumstoffkörper und die dadurch erreichte, sich aus dem Zusammenwirken von Schaumstoffkörper und Bezug ergebende Grundfestigkeit des Formteils mit weniger aufwendigen und massiven Verstärkungs- und Rahmenelementen gearbeitet werden kann, ohne Einbußen hinsichtlich der gewünschten Eigenschaften in Kauf nehmen zu müssen. Im Zusammenhang mit diesen Einbauten ist auch von Bedeutung, daß aufgrund des Wegfalls einer mechanischen Nachbearbeitung zum Aufbrechen der Zellstruktur, wie dies bei bisher bekannten Formteilen dieser Art erforderlich war, keine Gefahr einer Verformung dieser Einbauten bzw. Rahmenkonstruktionen besteht.

Von besonderem Vorteil ist es ferner, wenn gemäß einer Ausführungsvariante der Erfindung die rückseitig überstehenden Randbereiche des Bezugmaterials gleich während des Schäumvorgangs am Schaumstoffkörper festgeschäumt werden, da auf diese Weise zusätzliche Arbeitsgänge, insbesondere das Festkleben, vermieden und ein optisch einwandfreies Erscheinungsbild des fertigen Formteils gewährleistet werden kann.

Ein wesentlicher Aspekt der vorliegenden Erfindung besteht auch in dem Verfahren zur Herstellung eines Formteils der beschriebenen Art. Dabei wird eine verschließ- und aufheizbare Form verwendet und das vorgenähte Bezugmaterial in die Form eingebracht und positioniert, und anschließend erfolgt das Einfüllen der Schaummischung, das abdichtende Verschließen und Aufheizen der Form, worauf nach vorgebbarer Zeit das mit dem Bezug versehene Formteil aus der Form entnommen werden kann.

Wesentlich ist bei der erfindungsgemäßen Ausgestaltung dieses Verfahrens, daß die Temperatur der Form zwischen aufeinanderfolgenden Schäumvorgängen nur auf einen Wert erniedrigt wird, der deutlich über der Soll-Einfülltemperatur der Schaummischung gelegen ist, und daß das jeweils in die Form eingebrachte Bezugmaterial als die Wärmeleitung verzögernde Isolierschicht zwischen Form und Schaummischung verwendet wird.

Auf diese Weise wird vermieden, daß die Form nach jedem Schäumvorgang sehr stark und beispielsweise auf etwa 40°C abgekühlt werden muß, um eine Schädigung der Schaummischung zu verhindern. Durch die Vermeidung dieses Abkühlschrittes ergibt sich nicht nur eine entscheidende Verbesserung der Energiebilanz, sondern auch eine wesentliche Erhöhung der Wirtschaftlichkeit in der Ausnutzung der Form.

Bei dem Verfahren nach der Erfindung ist es möglich, mit einem sehr geringen Form-Innendruck zu arbeiten, was die Abdichtung der Form entscheidend erleichtert, und zwar insbesondere auch dann, wenn Verstärkungselemente aus der Form herausgeführt werden müssen. Toleranzen in der Position der herausgeführten Verstärkungselemente wirken sich dabei nicht störend aus, da aufgrund des geringen Innendrucks diesen Toleranzen durch einfache Abdichtmaßnahmen Rechnung getragen werden kann. Generell wird es durch das Verfahren nach der Erfindung auch ermöglicht, leichtere Werkzeugkonstruktionen zu verwenden und somit das Werkzeuginvestment in erwünschter Weise zu verringern.

Weitere vorteilhafte Merkmale der Erfindung sind in den Unteransprüchen angegeben.

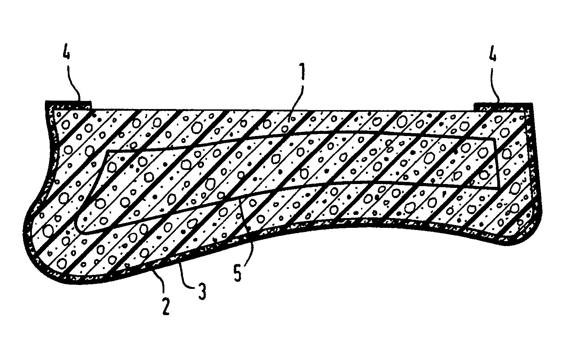

Ein Ausführungsbeispiel der Erfindung ist in der Zeichnung dargestellt, deren einzige Figur den schematischen Grundaufbau eines mit einem Bezugmaterial versehenen Formteils zeigt.

Das Formteil, das konvexe und konkave Bereiche aufweist, besteht aus einem offenporigen Heißschaumstoffkörper 1 sowie einem Bezugmaterial 3. Das Bezugmaterial 3 ist innenseitig mit einer Schaumstoffkaschierung 2 versehen, deren Stärke üblicherweise im Bereich von 4 bis 6 mm liegt, wenn die Kaschierung allein aus einem Polyurethanschaum besteht. Es kann jedoch auch mit dünneren Kaschierungsschichten, insbesondere in Verbindung mit einer zusatzlichen Folie gearbeitet werden.

Die Schaumkaschierung 2 des Bezugmaterials 3 und der Heißschaum verbinden sich während des Aufschäumvorgangs vollflächig, intensiv und dauerhaft.

Angedeutet ist in der Zeichnung auch eine integrierte bzw. miteingeschäumte Drahtrahmenkonstruktion 5, die zu Verstärkungs- bzw. Versteifungszwecken dient.

Die Bezugmaterialüberstände bzw. -ränder 4 auf der Produktrückseite sind entweder mit dem Schaumstoffkörper 1 verklebt oder vorzugsweise unmittelbar festgeschäumt.

## Ansprüche

1. Elastisches Formteil, bestehend aus einem zumindest sichtseitig vorgesehenen, innenseitig wenigstens mit einer Schaumkaschierung ausgestatteten und entsprechend der Endform vorgenähten Bezugmaterial und einem durch einen Ausschäumvorgang in den Bezug eingebrachten und diesen in der vorgegebenen Endform hinterfüllenden und spannenden Schaumstoffkörper,
dadurch **gekennzeichnet,**
daß der Schaumstoffkörper (1) aus einem offenporigen, sich mit der Bezugsmaterialkaschierung (2) vollflächig verbindenden, nach dem Heißschaumverfahren verarbeiteten PUR-Schaumstoff besteht.

2. Formteil nach Anspruch 1,
**gekennzeichnet** durch
die Ausbildung als hinterschäumtes Füllstuck für Kraftfahrzeugsitze und Rückpolster, insbesondere für die wand- bzw. türseitigen Bereiche von Fondsitzbänken.

3. Formteil nach Anspruch 1 oder 2,
dadurch **gekennzeichnet,**
daß in den Schaumstoffkörper (1) insbesondere metallische Verstärkungs- und/oder Rahmenelemente (5) integriert sind, die sich zumindest zum Teil zu Befestigungszwecken nach außen erstrecken.

4. Formteil nach einem der vorhergehenden Ansprüche,
dadurch **gekennzeichnet,**
daß die rückseitig überstehenden Randbereiche (4) des Bezugmaterials (3) zumindest bereichsweise umgelenkt und unmittelbar am Schaumstoffkörper (1) festgeschäumt sind.

5. Formteil nach einem der vorhergehenden Ansprüche,
dadurch **gekennzeichnet,**
daß sowohl bei konvexen als auch konkaven Konturen in allen Bereichen eine vollflächige Verbindung zwischen PUR-Schaum und Bezugmaterialkaschierung durch Festschäumung realisiert ist.

6. Verfahren zur Herstellung eines Formteils nach einem oder mehreren der vorhergehenden Ansprüche unter Verwendung einer verschließ- und aufheizbaren Form, wobei das vorgenähte Bezugmaterial in die Form eingebracht und positioniert wird und anschließend das Einfüllen der Schaummischung, das abdichtende Verschließen und das Aufheizen der Form erfolgt und nach vorgebbarer Zeit das Formteil aus der Form entnommen wird,
dadurch **gekennzeichnet,**
daß die Temperatur der Form zwischen aufeinanderfolgenden Schäumvorgängen auf einen Wert erniedrigt wird, der deutlich über der Soll-Einfülltemperatur der Schaummischung gelegen ist, und daß das jeweils in die Form eingebrachte Bezugmaterial als die Wärmeübertragung verzögernde Isolierschicht zwischen Form und Schaummischung verwendet wird.

7. Verfahren nach Anspruch 6,
dadurch **gekennzeichnet,**
daß die Formtemperatur während aufeinanderfolgender Schäumvorgänge etwa im Temperaturbereich zwischen 80°C und 120°C weitgehend konstant gehalten und die Mischung mit einer Temperatur von etwa 25°C bis 35°C eingebracht wird.

8. Verfahren nach Anspruch 6 oder 7,
dadurch **gekennzeichnet,**
daß die erforderliche Heizung der Form zumindest im wesentlichen nur auf den Formendeckel beschränkt wird.

9. Verfahren nach einem der Ansprüche 6 bis 8,
dadurch **gekennzeichnet,**
daß die überstehenden Ränder des Bezugmaterials während des Schäumvorgangs unter Ausübung einer Dichtfunktion zwischen den beiden Formteilhälften angeordnet werden.

10. Verfahren nach einem der Ansprüche 6 bis 8,

dadurch **gekennzeichnet,**
daß der Rand des Bezugmaterials während des Schäumvorgangs innerhalb der Form und etwa in der Trennbereichsebene der Form nach innen umgelenkt gehalten und unmittelbar festgeschäumt wird.

**Europäisches Patentamt**

# EUROPÄISCHER RECHERCHENBERICHT

Nummer der Anmeldung

## EP 90 11 9426

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-4 831 697 (URAI)<br>* Spalte 3, Zeilen 15-35; Abbildung 2b *<br>– – – | 1-5 | A 47<br>C 7/18<br>B 29 C 67/22 |
| Y | FR-A-2 629 389 (IKEDA BUSSAN)<br>* Abbildungen 1-3; Seite 2, Zeile 17 - Seite 5, Zeile 23 *<br>– – – | 1-5 | |
| A | | 10 | |
| Y | US-A-3 940 468 (TUNSTALL)<br>* Spalte 3, Zeilen 46-60; Spalte 6, Zeile 30 - Spalte 7, Zeile 20 *<br>– – – | 6,7 | |
| Y | GB-A-2 002 675 (KOHKOKU CHEMICAL INDUSTRY)<br>* Abbildungen 1a-c; Seite 1, Zeile 112 - Seite 3, Zeile 104 *<br>– – – | 6,7 | |
| A | US-A-3 795 722 (SASSAMAN)<br>* Abbildung 2 *<br>– – – – – | 9 | |

| RECHERCHIERTE SACHGEBIETE (Int. Cl.5) |
|---|
| A 47 C<br>B 29 C |

Der vorliegende Recherchenbericht wurde für alle Patentansprüche erstellt

| Recherchenort | Abschlußdatum der Recherche | Prüfer |
|---|---|---|
| Den Haag | 18 Januar 91 | MYSLIWETZ W.P. |